## Europäisches Patentamt

## European Patent Office
## Office européen des brevets

(11) Veröffentlichungsnummer: **0 019 175**
A1

(12) # EUROPÄISCHE PATENTANMELDUNG

(21) Anmeldenummer: 80102421.7

(22) Anmeldetag: 05.05.80

(51) Int. Cl.³: **C 02 F 11/14**
C 02 F 1/54

(30) Priorität: 19.05.79 DE 2920434

(43) Veröffentlichungstag der Anmeldung:
26.11.80 Patentblatt 80/24

(84) Benannte Vertragsstaaten:
AT BE CH DE FR GB IT LI LU NL SE

(71) Anmelder: BASF Aktiengesellschaft
Carl-Bosch-Strasse 38
D-6700 Ludwigshafen(DE)

(72) Erfinder: Sander, Bruno, Dr.
Moerikstrasse 10
D-6700 Ludwigshafen(DE)

(54) Verfahren zur Verbesserung des Entwässerungsverhaltens von Schlämmen.

(57) Verbesserung des Entwässerungsverhaltens von Schlämmen unter Verwendung von organischen Flockungsmitteln, indem die Schlämme nach Zugabe der organischen Flockungsmittel 0,5 bis 3 Minuten, insbesondere 1 bis 2 Minuten in einer Mischvorrichtung einem Energieeintrag von 0,005 bis 0,5 Watt/Liter, insbesondere von 0,01 bis 0,2 Watt/Liter unterworfen werden.

Als organische Flockungsmittel können prinzipiell die handelsüblichen Marken eingesetzt werden. Hierbei handelt es sich um wasserlösliche, makromolekulare Verbindungen, die durch Polymerisation oder durch Copolymerisation von Acrylamid, von Acrylsäure und/oder ihren Salzen oder von Estern der Acrylsäure bzw. Methacrylsäure, die über ihre Alkoholkomponente speziell modifiziert worden sind.

EP 0 019 175 A1

Croydon Printing Company Ltd.

BASF Aktiengesellschaft                    O.Z. 0050/033858

Verfahren zur Verbesserung des Entwässerungsverhaltens
von Schlämmen

Die vorliegende Erfindung betrifft ein Verfahren zur Verbesserung des Entwässerungsverhaltens von Schlämmen unter
Verwendung von organischen Flockungsmitteln.

Hauptziel der maschinellen Schlammentwässerung ist es,
die Schlammfeststoffe möglichst hoch aufzukonzentrieren,
damit die Schlammbeseitigung auf dem Wege der Deponie,
der Verbrennung oder bei einer möglichen Verwertung z.B.
als Bodenverbesserungsmittel in der Landwirtschaft auf
wirtschaftliche Weise erfolgen kann.

Es ist üblich, daß bei der Entwässerung auf kontinuierlich arbeitenden Entwässerungsmaschinen wie z.B. Siebbandpressen, Vakuumbandfiltern, Vakuumtrommelfiltern,
Zentrifugen usw. den zu entwässernden Schlämmen vor oder
während des Entwässerungsvorgangs organische Flockungsmittel zugesetzt werden, damit die Entwässerungseigenschaften der Schlämme verbessert werden. Die Flockungsmittel werden in Form ihrer Lösungen oder Emulsionen entweder direkt in die Schlammleitung vor oder nach der
Schlammpumpe zudosiert oder in Mischtrommeln zugegeben.
In den meisten Fällen wird der Schlamm bereits nach 10
bis 30 Sekunden Kontaktzeit mit den zugegebenen Flockungsmitteln entwässert. Im Falle der Verwendung von Rührbehältern als Mischorgan wird die Kontaktzeit von der Durchsatzleistung der Entwässerungsmaschine bestimmt und ist
oft für eine optimale Entwässerung zu gering.

Aufgabe der Erfindung ist es daher, durch geeignete
Maßnahmen bei der Schlammvorbehandlung dafür zu sorgen,
daß eine optimale Entwässerbarkeit der Schlämme erreicht
wird.
Spr/BL                                    BAD ORIGINAL

0019175

Diese Aufgabe wird erfindungsgemäß dadurch gelöst, daß die Schlämme nach Zugabe der Flockungsmittel 0,5 bis 3 Minuten, insbesondere 1 bis 2 Minuten in einer Mischvorrichtung einem Energieeintrag von 0,005 bis 0,5 Watt/Liter, insbesondere von 0,01 bis 0,2 Watt/Liter unterworfen werden. Es wurde also gefunden, daß bis zum Erreichen der optimalen Entwässerbarkeit der mit organischen Flockungsmittel konditionierten Schlämme eine bestimmte Zeitspanne benötigt wird, die Flockungsreifezeit. Die Flockungsreifezeit (FRZ) ist abhängig von dem jeweiligen Schlamm, von dem verwendeten Flockungsmittel, vom Energieeintrag beim Vermischen dieser beiden Komponenten und von der Schlammkonzentration. Der mögliche Energieeintrag wird wiederum begrenzt durch die mechanische Stabilität der geflockten Schlämme.

Als Vorrichtung kann ein vertikaler Rührbehälter verwendet werden, in dessen unteren Teil der Schlamm eingetragen wird und an dessen oberen Ende der Schlamm abfließt und zwar in der Weise, daß durch Heben und Senken des Schlammspiegels, z.B. durch Öffnen und Schließen verschiedener Ablaufstutzen oder durch Anheben oder durch Absenken eines Wehres, die jeweils optimale Verweilzeit eingestellt werden kann. Dabei wird der geflockte Schlamm unter Rühren bei Rührerdrehzahlen im Bereich von 5 bis 50 U/min behandelt.

Nach einer anderen Ausführungsform kann als Vorrichtung eine horizontal angeordnete Mischtrommel verwendet werden, die oberflächenerneuernde Einbauten besitzt und deren Gesamtlänge durch Zusammenfügen einzelner Elemente gemäß den erforderlichen Verweilzeiten variiert werden kann.

BAD ORIGINAL

Ferner können als Vorrichtung statische Rohrmischer verwendet werden, deren Gesamtlänge durch Zusammenfügen einzelner Elemente gemäß den erforderlichen Verweilzeiten variiert werden kann.

Durch das erfindungsgemäße Verfahren ist es möglich geworden, daß Schlämme durch ein sehr einfaches und wirtschäftliches Entwässerungsverfahren, der kontinuierlich ausgeführten Schwerkraftfiltration, sehr weitgehend entwässert werden können. Auf diese Weise können bereits 50 bis 75 % des vorhandenen Schlammwassers abgetrennt werden. Die Schlammfeststoffgehalte der Schlämme betragen dann 10 bis 20 Gew.%. Diese Entwässerungsgrade können bereits ausreichend sein, wenn es sich um Klärschlämme handelt, die als Bodenverbesserungsmittel in der Landwirtschaft Verwendung finden oder wenn die weitere Aufkonzentrierung in Trockenbeeten erfolgen soll.

Sollen jedoch die Schlämme deponiert oder verbrannt werden, dann ist eine weitere maschinelle Schlammentwässerung durch Anlegen einer Druckdifferenz oder durch Zentrifugieren erforderlich. Hierbei hat es sich überraschend gezeigt, daß in den folgenden Entwässerungsstufen eine höhere Aufkonzentrierung der Schlammfeststoffe erzielt werden kann, wenn die Schlämme vorher erfindungsgemäß weitgehend vorentwässert worden sind.
Weiterer Vorteil des erfindungsgemäßen Verfahrens besteht darin, daß die erforderlichen Flockungsmittelmengen geringer sind.

Unter Schlämme sollen verstanden werden:
Klärschlämme wie zum Beispiel Primärschlämme, die in der Vorklärstufe einer Kläranlage durch Sedimentation oder Flockung erhalten werden, Belebtschlämme (Überschußschlämme), die einer biologischen Kläranlage entstammen, Mischschlämme, die eine Abmischung der vorgenannten Schlämme darstellen, Faulschlämme und mineralisierte Schlämme, die z.B. durch Langzeitbelüftung bei Umgebungstemperatur entstehen. Diese Schlämme können kommunaler, industrieller oder gemischter Herkunft sein.

Ebenso kommen in Betracht:
Bergeschlämme, die im Steinkohlenbergbau bei der Kohleaufbereitung anfallen, Ölschlämme der Mineralölindustrie und Flußschlämme, die bei der Reinigung von Flüssen und Seen gefördert werden.

Die Schlammfeststoffgehalte dieser Schlämme können innerhalb weiter Grenzen schwanken. Bei Klärschlämme liegen die Schlammfeststoffgehalte im Bereich von 0,5 bis 15 Gew.% und bei den übrigen Schlämmen bis zu 40 Gew.%.

Als organische Flockungsmittel können prinzipiell die handelsüblichen Marken eingesetzt werden. Hierbei handelt es sich um wasserlösliche, makromolekulare Verbindungen, die durch Polymerisation oder durch Copolymerisation von Acrylamid, von Acrylsäure und/oder ihren Salzen oder von Estern der Acrylsäure bzw. Methacrylsäure, die über ihre Alkoholkomponente speziell modifiziert worden sind. Diese Flockungsmittel unterscheiden sich außerdem noch durch ihre unterschiedliche elektrische Ladung (kationisch, anionisch oder elektroneutral) und durch ihren Polymerisationsgrad.

Die Auswahl eines geeigneten Flockungsmittels nach Art und Menge erfolgt nach bekannten Methoden bereits im Labormaßstab. Solche Methoden wurden in der deutschen Patentanmeldung P 28 37 017.4 beschrieben. Die erforderlichen Flockungsmittelmengen liegen im Bereich von 50 bis

00119175

BASF Aktiengesellschaft — 5 — O.Z. 0050/033858

400 g/m³ Schlamm und sind abhängig von der Art des jeweiligen Schlamms und von der Feststoffkonzentration.

Die Flockungsmittel werden in Form ihrer 0,05 bis 0,5-prozentigen wäßrigen Lösungen oder Emulsionen eingesetzt. Die Herstellung solcher verdünnter Flockungsmittellösungen aus den festen und flüssigen Handelsprodukten erfolgt nach bekannten Methoden in handelsüblichen Vorrichtungen.

Die Flockungsmittellösungen werden direkt in die Schlammleitung vor oder nach der Schlammpumpe zudosiert. Hierbei können Eintragshilfen wie z.B. ein Kegelmischer vorteilhaft sein.

Als Vorrichtungen, welche die Einhaltung einer bestimmten Verweilzeit des geflockten Schlamms unter schonenden Mischbedingungen ermöglichen, kommen die oben beschriebenen Rührbehälter in Betracht. Als langsam laufende Rührertypen, die ein schonendes Mischen gestatten, werden Wendelrührer, Blattrührer gegebenenfalls mit Aussparungen oder Rechenrührer aus gestauchten Rohren verwendet.

Es können auch liegende Mischtrommeln verwendet werden, die für das Umwälzen und Verweilen des geflockten Schlamms entsprechende Einbauten wie z.B. Wehre oder Hohlwendeln verschiedener Steigung besitzen. Diese Vorrichtungen werden besonders bei spezifisch schweren Schlämmen, bei denen die anorganischen Bestandteile überwiegen, eingesetzt.

Ebenso können statische Rohrmischer verwendet werden. Solche Durchlaufmischer enthalten in ihrem Innern Wendeln. Es können mehrere Elemente hintereinander geschaltet werden, so daß eine Anpassung an die erfindungsgemäße Arbeitsweise besonders gut möglich ist.

Nach der erfindungsgemäß durchgeführten Schlammvorbehandlung erfolgt die maschinelle Schlammentwässerung: Im einfachsten Fall wird der geflockte Schlamm der kontinuierlichen Schwerkraftfiltration unterworfen, z.B. auf einem Siebband, das oberflächenerneuernde Vorrichtungen wie Pflugscharen oder Taumelscheiben besitzt. Als besonders geeignet erwiesen sich jedoch zylinderförmige Siebtrommeln. Im Innern dieser Siebtrommeln befindet sich ein zylinderförmiger Käfig, auf dessen Umfangsfläche das Filtergewebe aufgezogen wurde. Die Filtergewebe können aus Metalldraht oder aus Synthesefasern wie z.B. Polypropylen- oder Polyesterfasern bestehen. Die Siebtrommeln besitzen in ihrem Innern außerdem noch oberflächenerneuernde Einbauten, so daß der Schlamm beim Durchlauf intensiv gewendet wird. diese Einbauten sind Leitbleche, Wehre oder Hohlwendeln. Die Verweilzeit des zu entwässernden Klärschlamms in der Siebtrommel wird außer durch die Länge des Apparates und den Durchsatz noch durch den Füllgrad bestimmt. Dieser wiederum ist durch die Höhe der Wehre und durch unterschiedliche Steigungen der Hohlwendeln (Hohlschrauben) beeinflußbar. Die Siebtrommeln arbeiten bei Drehzahlen von 1 bis 20 U/min. Die Verweilzeiten in dieser Entwässerungsstufe betragen 1 bis 15 min und insbesondere 2 bis 5 min.

Die Entwässerung der geflockten Schlämme kann aber auch direkt auf Vakuumbandfiltern oder Vakuumtrommelfiltern erfolgen.

Für die Durchführung einer zweistufigen Entwässerung, bei der in der 1. Stufe eine kontinuierliche Schwerkraftfiltration wie oben beschrieben, ausgeführt wird, kommen folgende Entwässerungsmaschinen bzw. -kombinationen in Betracht:

Siebbandpressen, Siebtrommel/Kammerfilterpresse, Siebtrommel/Vakuumbandfilter, Siebtrommel/Vakuumtrommelfilter oder Siebtrommel/Dekanter.

Für die Ermittlung der Flockungsreifezeiten und der mechanischen Stabilität der geflockten Schlämme haben sich die folgenden Labormethoden bewährt:

Bestimmung der Flockungsreifezeit

500 ml einer zu untersuchenden Schlammprobe werden in ein 1 l Becherglas (hohe Form) gegeben. Dann wird unter Rühren bei 50 U/min mit einem quadratischen Blattrührer (7 cm Kantenlänge und 6 quadratische Aussparungen von 1 cm) eine 0,2-prozentige Flockungsmittellösung innerhalb von 10 Sekunden zugegeben. Durch Zugabe von Wasser in diese Lösung wird ein einheitliches Volumen eingestellt, wenn unterschiedliche Mengen an Flockungsmittel verwendet werden.

Nach dieser Rührzeit von 10 Sekunden wird der Schlamm unmittelbar auf eine Glasfilternutsche (Ø 120 mm) mit eingelegtem PP-Leinen (Ø 110 mm) gegeben und nach 30, 60, 90, 120, 180, 240, 300, 600 Sekunden Schwerkraftfiltration die Filtratmenge notiert. Dieser Versuch wird als Nullversuch ohne Flockungsreifezeit gewertet.

Um die optimale Flockungsreifezeit zu ermitteln, wird die Rührzeit in den nachfolgenden Einzelversuchen um jeweils 20, 60, 120, 180 Sekunden verlängert. Es werden wiederum die nach den angegebenen Zeitintervallen anfallenden Filtratmengen bestimmt.

19175

Bestimmung der mechanischen Stabilität
geflockter Schlämme

500 ml einer zu untersuchenden Schlammprobe werden in ein
1 l Becherglas (hohe Form) gegeben. Dann wird unter
Rühren bei 50 U/min mit einem quadratischen Blattrührer
(7 cm Kantenlänge und 6 quadratische Aussparungen von
1 cm) eine 0,2-prozentige Flockungsmittellösung innerhalb
von 10 Sekunden zugegeben. Durch Zugabe von Wasser in
diese Lösung wird ein einheitliches Volumen eingestellt,
wenn unterschiedliche Mengen an Flockungsmittel verwendet
werden.

Nach der Durchmischung werden die Proben bei verschiedenen Rührer-Drehzahlen (50, 100, 200, 300, 400, 500,
600 U/min) der Reifung unterworfen. Dir Rührzeit beträgt
jeweils 120 Sekunden.

Danach filtriert man die Schlammprobe durch ein Drahtsieb
(DIN 4188) von 1000 um, Drahtstärke: 0,56 mm, (Durchmesser: 100 mm). Der Feststoffdurchschlag wird gravimetrisch
bestimmt. Hierzu wird das Filtrat durch ein getrocknetes
und gewogenes Weißbandfilter filtriert. Das Filter wird
dann in einem Trockenschrank bei $110^{\circ}C$ bis zur Gewichtskonstanz getrocknet.

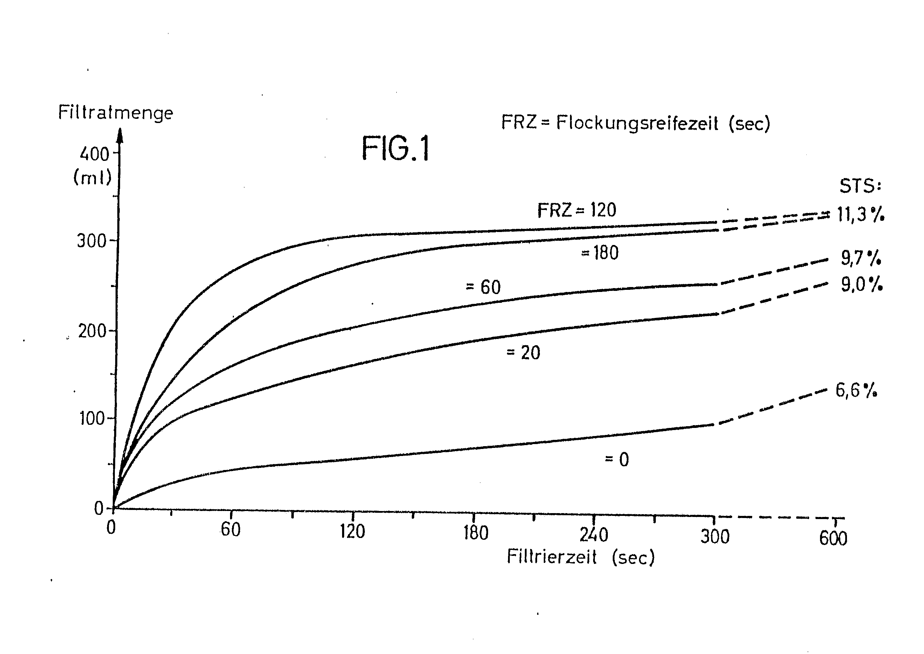

Figur 1 zeigt das Ergebnis einer Untersuchung über die
optimale FRZ grafisch dargestellt. Es wurde ein Mischschlamm aus einer mechanisch-biologischen Kläranlage mit
einem Schlammfeststoffgehalt (STS) von 6,0% und einem
organischen Anteil (oTS) am Schlammfeststoff von 53%
untersucht. Als Flockungsmittel wurde ®Sedipur CF 400 in einer Menge von 270 g/m$^3$ (4,5 kg/t STS) eingesetzt. Die Grafik zeigt, daß die optimale FRZ 120 Sekunden beträgt. Bei 180 Sekunden FRZ wird die Entwässerung wieder ungünstiger, da die Schlammflocken durch die längere Rührdauer partiell zerstört werden. Für die Praxis bedeutet dies, daß bei einem entsprechenden Eintrag von Rührenergie eine FRZ von 2 Min. eingehalten werden sollte.

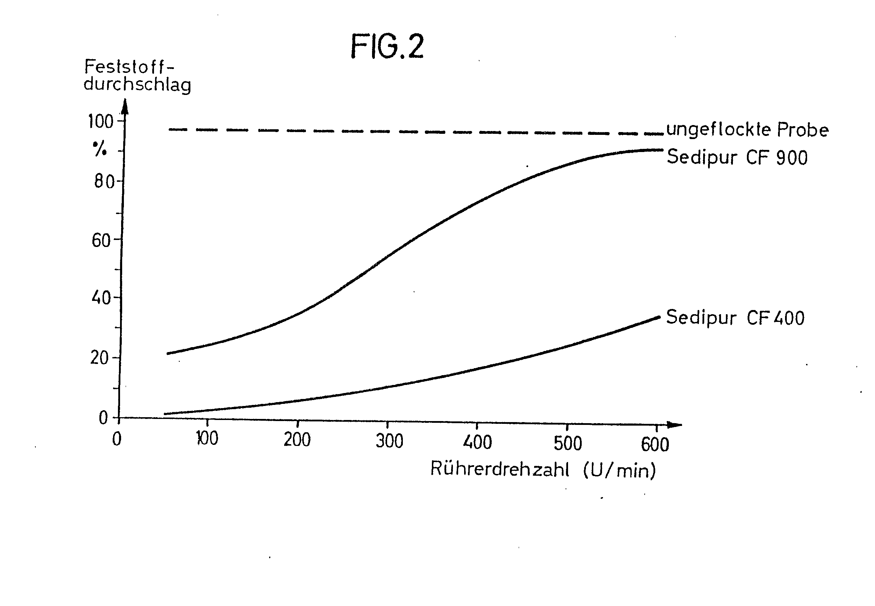

In Figur 2 sind die Ergebnisse einer Bestimmung der mechanischen Stabilität eines Mischschlamms grafisch dargestellt. Untersucht wurde ein Mischschlamm, der einen STS von 4,8% besaß. Der organische Anteil an STS betrug: 58,7%. Die Grafik zeigt, daß bei der ungeflockten Schlammprobe ein 100-prozentiger Feststoffdurchschlag erfolgt und bei den geflockten Proben mechanisch stabilere Flocken erhalten worden sind. Die Flockungsmittel werden mit der für die Entwässerung jeweils optimalen Menge eingesetzt (®Sedipur CF 400: 216 g/m$^3$, ®Sedipur CF 900: 288 g/m$^3$). Die Kurvenzüge zeigen, daß die mechanische Stabilität der Flocken wesentlich von der Art des verwendeten Flockungsmittels bestimmt wird. Für die Praxis bedeutet dies, daß bei Verwendung von ®Sedipur CF 400 zur Schlammentwässerung bei der Schlammvorhandlung ein höherer Energieeintrag möglich ist als bei Verwendung des anderen Flockungsmittels.

Tabelle 1 enthält eine Zusammenstellung der für verschiedenartige Schlämme gemäß Bestimmungsmethode ermittelten Flockungsreifezeiten. Der Ladungssinn und der Anteil der anionischen oder kationischen Modifizierung der verwendeten Flockungsmittel sowie die für eine optimale Entwässerung erforderliche Flockungsmittelmengen wurden angegeben. Beim Bergeschlamm und beim Flußschlamm 2 liefert eine 2-stufige Flockung optimal entwässerbare Schlämme. Hier wurde in einer 1. Stufe ein anionisches Flockungsmit-

0019175

tel und danach in einer 2. Stufe ein kationisches Flockungsmittel zugesetzt. In solchen Fällen muß für jede Flockungsstufe die optimale FRZ festgestellt werden.

Die Flockungsreifezeiten liegen im Bereich von 60 bis 180 Sekunden. Bei anionischen Flockungsmitteln sind die FRZ im allgemeinen länger als bei kationischen Flockungsmitteln.

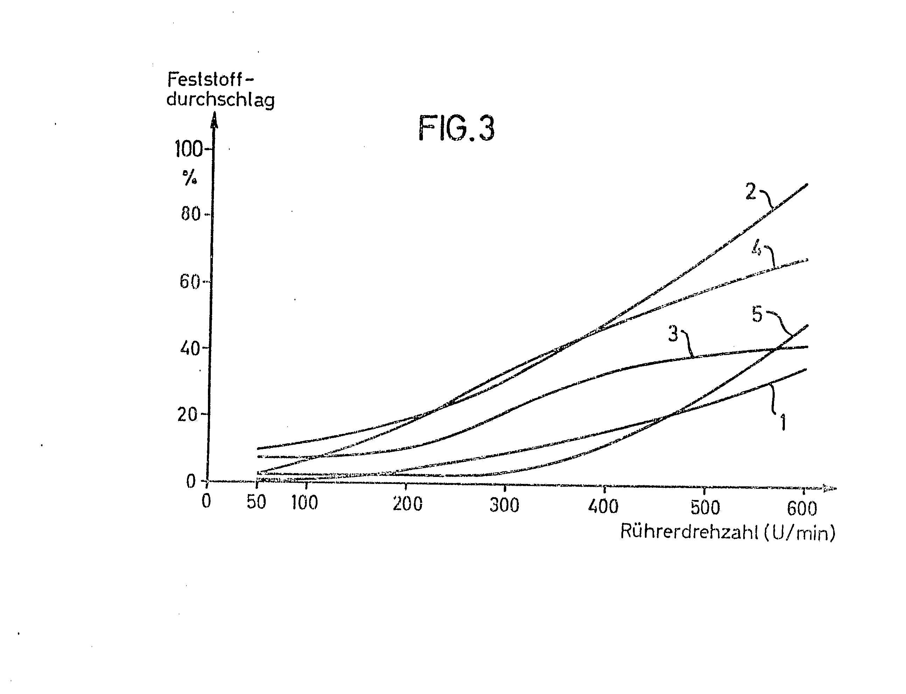

Figur 3 zeigt die unterschiedliche mechanische Stabilität von verschiedenartigen Schlämmen, die mit dem jeweils für die Schlammentwässerung wirksamsten Flockungsmittel behandelt worden sind. In Tabelle 2 sind die wichtigsten Schlammdaten und die verwendeten Flockungsmittel nach Art und Menge für die einzelnen Schlammarten angegeben.

Tabelle 2

| Kurve | Schlammart | STS % | oTS % | Flockungsmittel | | |
|-------|-----------|-------|-------|------|------|------|
| | | | | Art | Ladung Anteil in % | Menge kg/t STS |
| 1 | Primär-schlamm | 4,6 | 47,5 | anionisch | 40 | 2,2 |
| 2 | Belebt-schlamm | 2,6 | 70,6 | kationisch | 90 | 6,0 |
| 3 | Faul-schlamm | 2,5 | 55,4 | kationisch | 90 | 6,0 |
| 4 | Berge-schlamm | 34,8 | 28,5 | anionisch[+] kationisch | 40 70 | 0,2 0,1 |
| 5 | Fluß-schlamm | 26,2 | 7,7 | anionisch | 40 | 0,35 |

+ 2-stufige Flockung.

Bei den mechanisch stabileren Primär-, Faul- und Flußschlämmen ist bei der Flockung ein höherer Energieeintrag möglich. Hierdurch können die erforderlichen Flockungsreifezeiten gegebenenfalls verringert werden.

Die Erfindung wird nachfolgend anhand von Beispielen
näher erläutert. Die dort angegebenen Prozentzahlen sind
immer Gew.%.

Beispiel 1

Es wurde ein Mischschlamm aus einer mechan.-biolog.
Kläranlage untersucht, der aus 85 Teilen Belebtschlamm
und 15 Teilen Primärschlamm besteht, der bis auf einen
Schlammfeststoff-Gehalt von 5,4% eingedickt wurde und
dessen organischer Anteil am Schlammfeststoff 70,8%
betrug.

In Vorversuchen wurde als wirksamstes Flockungsmittel
®Sedipur CF 400 und als optimale Dosiermenge 250 mg/l
bestimmt. Die erforderliche Flockungsreifezeit wurde nach
der vorstehend beschriebenen Methode ermittelt. Sie
beträgt 120 Sekunden.

Jeweils 500 ml einer Schlammprobe wurden in ein 1 l Becherglas (hohe Form) gegeben und unter Rühren bei
einer Drehzahl von 50 U/min innerhalb von 20 Sekunden mit
einer 0,2-prozentigen wäßrigen Lösung von ®Sedipur CF 400
in der oben angegebenen Menge versetzt. Es wurde ein
quadratischer Blattrührer (70 mm) mit 6 quadratischen
Aussparungen (10 mm) verwendet. Bei der Schlammprobe a
wurde unmittelbar danach, bei der Schlammprobe b nach
60 Sekunden Rührdauer und bei der Schlammprobe c nach
120 Sekunden Rührdauer entwässert.

Die Entwässerung erfolgte in einer 1. Stufe durch Schwerkraftfiltration und in einer 2. Stufe durch Druckfiltration.

0019175

## Schwerkraftfiltration:

Die vorbehandelten Schlammproben wurden auf eine Büchner-Nutsche aus Duranglas mit plangeschliffenem Schlitzsieb (110 mm Ø) gegeben, auf dem ein Filtergewebe aus Polypropylen-Leinen (110 mm Ø) gelegt wurde. Die ablaufenden Filtrate wurden in einem Meßzylinder (500 ml) aufgefangen. Nach 30 Minuten wird die Filtratmenge (ml) gemessen. Die erhaltene Filtratmenge gibt Aufschluß über die Schwerkraft-Entwässerungsfähigkeit der einzelnen Schlammproben.

## Druckfiltration:

Die vorentwässerten Schlammproben wurden dann in einer Stempelpresse (Fabrikat: Hubert, Sneek/Holland) durch Druckfiltration weiterhin entwässert. Dabei wurde 1 Minute bei wachsendem und 2 Minuten lang bei einem konstanten Druck von 10 bar gepreßt. Die Restfeuchten der Preßkuchen wurde gravimetrisch bestimmt.

Die bei verschiedenen Flockungsreifezeiten erhaltenen Entwässerungsergebnisse sind in Tabelle 3 aufgeführt:

## Tabelle 3:

| Probe | FRZ (sec.) | Feststoffgehalt der Filterkuchen (%) | |
|-------|------------|------------------------|----------------|
| | | nach Schwerkraftfiltration | nach Druckfiltration |
| a | 0 | 6,2 | 21,3 |
| b | 60 | 8,4 | 22,9 |
| c | 120 | 9,9 | 25,5 |

0019175

Die Daten zeigen, in welchem Ausmaß bei Einhaltung der optimalen Flockungsreifezeit in den einzelnen Entwässerungsstufen günstigere Entwässerungsergebnisse erzielbar sind.

Beispiel 2

Ein Faulschlamm einer kommunalen Kläranlage, der einen STS von 4,6% und einen oTS von 53,0% besaß, sollte durch zweistufige Entwässerung in der Dünnschicht auf einer Siebbandpresse entwässert werden. In Vorversuchen wurde als wirksamstes Flockungsmittel $^{®}$Sedipur CF 400 in einer Menge von 150 g/m$^3$ Schlamm und als optimale FRZ 120 Sekunden festgestellt.

Eine 0,1-prozentige Lösung des Flockungsmittels wurde direkt in die Zulaufleitung des Schlamms dosiert: Der geflockte Schlamm wurde dann nach ca. 10 Sekunden Aufenthaltszeit in der Schlammleitung auf die Seihzone einer Siebbandpresse gegeben. Die für eine einwandfreie Fahrweise der Maschine erforderliche Flockungsmittelmenge betrug 220 g/m$^3$ Schlamm. Die erhaltenen Schlammfeststoffgehalte betragen nach Seihzone 6,5% und nach der Entwässerung im Preßteil der Maschine: 30,5%.

Für einen weiteren Versuch wurde zwischen Flockungsmittel-Zugabestelle und der Entwässerungsmaschine eine liegende Mischtrommel geschaltet, die in ihrem Innern Leitbleche und Wehre besaß, so daß der geflockte Schlamm umgewälzt und durchmischt wurde. Der Apparat war so dimensioniert, daß die Verweilzeit des Schlamms in der Mischtrommel ca. 120 Sekunden betrug. Die übrigen Versuchsbedingungen (Durchsatz, Bandgeschwindigkeit, Preßdrücke) wurden konstant gehalten. Es zeigte sich, daß die erforderliche Flockungsmittelmenge bis auf 160 g/m$^3$ reduziert werden

0019175

konnte. Die Schlammfeststoffgehalte betragen nach der Seihzone 12,5% und in den erhaltenen Preßkuchen 39,5%.

Das Beispiel zeigt, daß bei Einhaltung der Flockungsreifezeit ein geringerer Flockungsmittelverbrauch erforderlich ist und höhere Entwässerungsgrade erzielt werden können.

Beispiel 3
(Einstufige Entwässerung durch Schwerkraftfiltration)

Einem Belebtschlamm einer biologischen Kläranlage, der bis auf 4,1% Schlammfeststoff eingedickt worden ist und dessen organischer Anteil am Schlammfeststoff 53,4% betrug, wurde eine 0,1-prozentige wäßrige Lösung eines Flockungsmittels mit 90-prozentiger kationischer Modifizierung (®Sedipur CF 900) in einer Menge von 300 g/m$^3$ Schlamm zugegeben. Die Zugabe erfolgte in der Schlammleitung unmittelbar vor dem Zulauf in eine liegende Mischtrommel. Die Verweilzeit in der Mischtrommel betrug ca. 20 Sekunden. Danach wurde der geflockte Schlamm in einer Siebtrommel, die sich mit einer Drehzahl von 8 U/min bewegte, durch Schwerkraftfiltration entwässert. Die Siebtrommel besaß in ihrem Innern Leitbleche und Wehre, an denen der Schlamm umgewälzt wurde. Der Feststoffgehalt des entwässerten Schlamms betrug 10,8%.

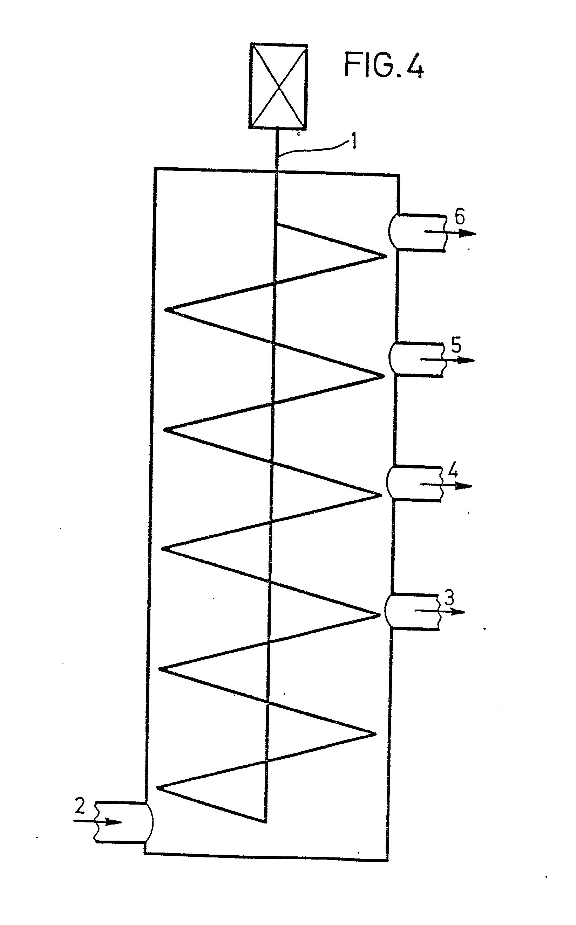

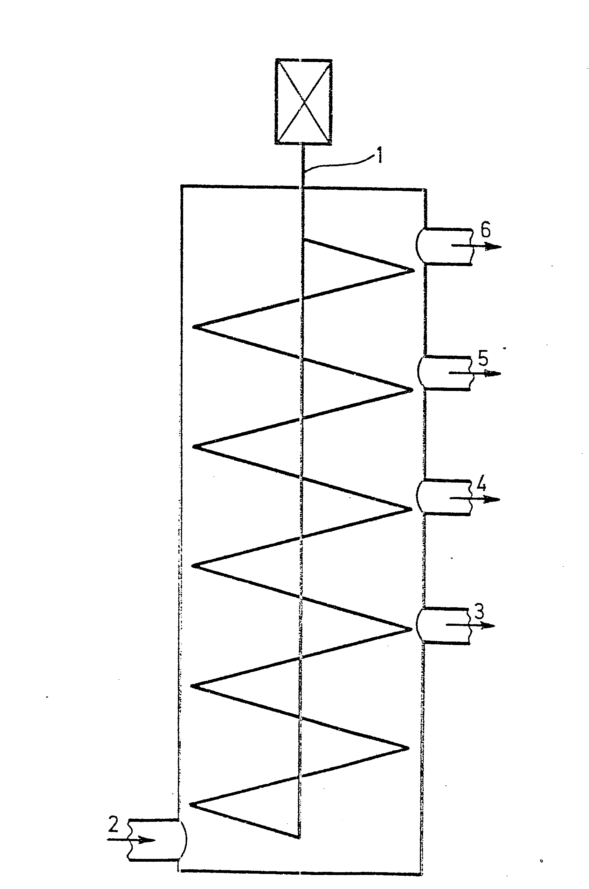

In einem weiteren Versuch wurde die Mischtrommel durch einen Rührbehälter ersetzt, der in Figur 4 dargestellt wurde. Als Rührorgan wurde ein Wendelrührer 1 verwendet. Der geflockte Schlamm wurde am unteren Teil 2 des Rührbehälters eingetragen. Durch Öffnen und/oder Schließen der verschiedenen Ablaufstutzen 3, 4, 5 und 6 wurde sichergestellt, daß der Schlamm in dem Rührbehälter 120 Sekunden verweilt. Diese Flockungsreifezeit wurde für diesen Schlamm und das verwendete Flockungsmittel in Vorversuchen ermittelt. Die optimale Rührerdrehzahl für den Wendelrührer wurde in verschiedenen Versuchseinstellungen aus den Entwässerungsergebnissen bei der Schwerkraftfiltration ermittelt. Sie betrug 12 U/min. Die Drehzahl der Siebtrommel wurde weiterhin mit 8 U/min konstant gehalten.

Bei dieser Fahrweise wurden Schlammfeststoffgehalte von 15,5% erzielt. Es wurden somit 76,7% des Schlammwassers abgetrennt. Der Schlamm wird als Bodenverbesserungsmittel eingesetzt. Durch die Verminderung des Schlammvolumens auf 26,5% wurde ein wirtschaftlicher Transport möglich.

Beispiel 4

Es wurde ein Flußschlamm untersucht, der bei der Entschlammung eines Hafenbeckens gefördert wurde. Der Schlammfeststoffgehalt betrug 26,2% und der organische Anteil an Feststoff 7,7%.

Die Voruntersuchungen im Labor führten zu folgenden Ergebnissen:

Flockungsmittel:                 anionisches mit 40-prozentiger
                                 Modifizierung: ®Sedipur AF 400
Flockungsmittelmenge:            150 g/m$^3$
Flockungsreifezeit:              180 Sekunden.

Der Flußschlamm wurde auf einer Siebbandpresse entwässert. Die Zugabe einer 0,2-prozentigen wäßrigen Flockungsmittellösung erfolgte zunächst in die Schlamm-Zufuhrleitung. Der geflockte Schlamm wurde nach ca. 30 Sekunden Durchflußzeit in dieser Leitung entwässert. Dann wurden zwei statische Rohrmischer, in denen der geflockte Schlamm ca. 120 bis 150 Sekunden durchmischt wurde, eingebaut und entwässert.

Es wurden folgende Ergebnisse erzielt:

|                          | ohne Rohrmischer | mit Rohrmischer |
|--------------------------|------------------|-----------------|
| Flockungsmittel-verbrauch $g/m^3$ | 220     | 140             |
| Feststoffgehalt (%)      |                  |                 |
| nach Seihzone            | 28,2             | 33,8            |
| im Preßkuchen            | 55,5             | 68,0            |

Bei dem Versuch ohne Einhaltung der optimalen Flockungsreifezeit war der weniger gut vorentwässerte Schlamm nicht ausreichend druckstabil, so daß er im Preßteil der Maschine seitlich (zwischen Ober- und Unterband) herausgedrückt wurde. Dieser Mangel trat bei der erfindungsgemäßen Fahrweise nicht auf.

Beispiel 5

Untersucht wurde ein Bergeschlamm, der bei der Kohleaufbereitung in einer Flotationsanlage erhalten worden ist. Der Schlammfeststoffgehalt betrug 34,8%, der organische Anteil am Feststoff 28,5%. Dieser bestand im wesentlichen aus feinteiliger Kohle.

Vorversuche zeigten, daß durch eine zweistufige Flockung zuerst mit einem anionischen Flockungsmittel und dann mit einem kationischen Flockungsmittel die günstigsten Entwässerungsergebnisse erhalten werden.

Labordaten

| | Flockungsmittel | | FRZ |
|---|---|---|---|
| | Art | Menge ($g/m^3$) | (sec.) |
| Stufe I | $^R$Sedipur AL 430 | 60 | 120 |
| Stufe II | $^R$Sedipur CL 730 | 30 | 60 |

Die technische Entwässerung wurde auf einer Siebbandpresse durchgeführt. Die Flockungsmittel, in diesem Falle Emulsionsmarken, wurden in Form ihrer 0,05-prozentigen wäßrigen Lösungen bzw. Dispersionen eingesetzt. Die Zugabe des anionischen Flockungsmittels erfolgte an einer Impfstelle unmittelbar vor einer Gruppe von hintereinander geschalteten statischen Rohrmischern, die in ihrem Innern Wendeln enthielten. Der geflockte Schlamm verweilte darin 100 bis 120 Sekunden. Danach wurde an einer 2. Impfstelle das kationische Flockungsmittel zugegeben. Der geflockte Schlamm wurde dann noch in einem weiteren statischen Rohrmischer 40 bis 60 Sekunden vermischt. Anschließend erfolgte die zweistufige Entwässerung in der Seihzone und im Preßteil der Siebbandpresse. Es wurden folgende Ergebnisse erhalten:

| Flockungsmittelverbrauch | $^R$Sedipur AL 430 | $^R$Sedipur CL 730 |
|---|---|---|
| $g/m^3$ | 70 | 35 |
| Feststoffgehalt | nach Seihzone | im Preßkuchen |
| % | 43,0 | 76,5 |

Der Versuch wurde ohne Verwendung der statischen Rohrmischer und ohne Einhaltung der erforderlichen Flockungsreifezeiten in den einzelnen Flockungsstufen wiederholt. Das anionische Flockungsmittel wurde in die Schlammleitung gegeben. Nach ca. 30 Sekunden Durchflußzeit wurde das

0019175

kationische Flockungsmittel zugefügt. Der geflockte Schlamm verweilte noch 20 Sekunden in der Zulaufleitung und wurde dann auf der Siebbandpresse entwässert.

Ergebnisse:

| Flockungsmittelverbrauch g/m³ | ®Sedipur AL 430 | ®Sedipur CL 730 |
|---|---|---|
| | 120 | 60 |

| Feststoffgehalt % | nach Seihzone | im Preßkuchen |
|---|---|---|
| | 38,8 | 65,3 |

Tabelle 1

| Schlamm | | STS % | oTS % | Flockungsmittel Ladung Art | Anteil in % | Verbrauch kg/t STS | Flockungsreifezeit (gemäß Bestimmungsmethode) Sek. |
|---|---|---|---|---|---|---|---|
| Primärschlamm | 1 | 5,0 | 50,0 | anionisch | 40 | 2,0 | 180 |
| | 2 | 15,0 | 33,1 | " | 40 | 1,3 | 120 |
| Belebtschlamm | 1 | 4,0 | 70,0 | kationisch | 90 | 6,5 | 120 |
| | 2 | 4,0 | 70,0 | " | 40 | 5,5 | 120 |
| | 3 | 2,0 | 72,0 | " | 90 | 11,0 | 180 |
| Mischschlamm | | 6,0 | 53,0 | " | 40 | 4,5 | 120 |
| Faulschlamm | 1 | 2,4 | 58,0 | " | 70 | 10,0 | 120 |
| | 2 | 4,6 | 53,0 | " | 40 | 3,3 | 120 |
| | 3 | 4,2 | 45,0 | " | 40 | 4,8 | 60 |
| Bergeschlamm | | 40,0 | 29,0 | neutral | – | 0,45 | 120 |
| | | | | anionisch } | 40 | 0,2 | 120 } 2-stufige |
| | | | | kationisch } | 90 | 0,1 | 60 } Flockung |
| Flußschlamm | 1 | 26,2 | 7,7 | anionisch | 40 | 0,35 | 180 |
| | 2 | 24,5 | 11,4 | anionisch } | 40 | 0,36 | 120 } 2-stufige |
| | | | | kationisch } | 90 | 0,12 | 60 } Flockung |

0019175

Patentanspruch

Verfahren zur Verbesserung des Entwässerungsverhaltens von Schlämmen unter Verwendung von organischen Flockungsmitteln dadurch gekennzeichnet, daß die Schlämme nach Zugabe der organischen Flockungsmittel 0,5 bis 3 Minuten, insbesondere 1 bis 2 Minuten in einer Mischvorrichtung einem Energieeintrag von 0,005 bis 0,5 Watt/Liter, insbesondere von 0,01 bis 0,2 Watt/Liter unterworfen werden.

Zeichn.

Filtratmenge

FRZ = Flockungsreifezeit (sec)

FIG.1

400 (ml)

STS:

FRZ = 120 ........ 11,3 %

300

= 180

= 60 ........ 9,7 %
........ 9,0 %

200

= 20

........ 6,6 %

100

= 0

0

0   60   120   180   240   300   600

Filtrierzeit (sec)

## FIG.2

Feststoff-durchschlag

y-axis: 100 %, 80, 60, 40, 20, 0

x-axis: 0, 100, 200, 300, 400, 500, 600 — Rührerdrehzahl (U/min)

ungeflockte Probe

Sedipur CF 900

Sedipur CF 400

**FIG.3**

Feststoffdurchschlag

Rührerdrehzahl (U/min)

19175

FIG.4

0019175

Europäisches
Patentamt

**EUROPÄISCHER RECHERCHENBERICHT**

Nummer der Anmeldung

EP 80 10 2421

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>DE - A - 1 936 805</u> (G. WERNER)<br>* Seite 10, Anspruch 1; Seite 3, letzter Absatz *<br><br>-- | 1 |
| | <u>US - A - 4 046 684</u> (EBARA INFILCO)<br>* Spalte 5, Zeile 55 - Spalte 6, Zeile 15 *<br><br>-- | 1 |
| A | <u>US - A - 3 660 284</u> (T.R. CAMP)<br><br>---- | |

**KLASSIFIKATION DER ANMELDUNG (Int.Cl³)**

C 02 F 11/14
C 02 F 1/54

**RECHERCHIERTE SACHGEBIETE (Int. Cl³)**

C 02 F 11/14
C 02 F 1/54

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsatze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 21-08-1980 | TEPLY |

EPA form 1503.1   06.78